# EUROPEAN PATENT APPLICATION

(11) **EP 3 453 997 A1**
(43) Date of publication of application: **13.03.2019**
(21) Application number: 17189654.1
(22) Date of filing: 06.09.2017
(51) Int. Cl.: F28D 20/00, F23C 10/00, F23C 13/04, F23C 99/00

(54) **SYSTEM FOR ENERGY STORAGE INCLUDING A HEAT TRANSFER FLUID TANK**

(71) Applicant: Nederlandse Organisatie voor toegepast- natuurwetenschappelijk onderzoek TNO, 2595 DA 's-Gravenhage (NL)
(72) Inventor: Cuypers, Ruud, 2595 DA 's-Gravenhage (NL); Geers, Leonard Ferdinand Gerard, 2595 DA 's-Gravenhage (NL); Bodis, Pavol, 2595 DA 's-Gravenhage (NL); van Vliet, Laurens Daniël, 2595 DA 's-Gravenhage (NL); Schols, Erin Elizabeth, 2595 DA 's-Gravenhage (NL); Kalkman, Arie Jacobus, 2595 DA 's-Gravenhage (NL)
(74) Representative: V.O.

(57) **Abstract**

The invention is directed to a system for energy storage comprising a heat transfer fluid (HTF) tank comprising a HTF such as water; a chemical combustion reactor that is at least partially filled with a metal and/or an oxide thereof, and that comprises a gas inlet and a gas outlet; wherein said chemical combustion reactor is at least partially submerged in the HTF within said HTF tank.

## Description

The invention is in the field of energy storage and conversion. The invention is in particular directed to a system for electrical and thermal energy storage and conversion.

The supply of alternative energy sources such as solar, wind and hydro-powered energy generally depends on the amount of available sunlight, wind, water etc. As such, these alternative energy sources are associated with fluctuating supplies. and as society moves from fossil-fuel based energy supplies to alternative energy sources, the need for energy storage systems to accommodate these fluctuating supplies and to cover mismatch between supply and demand has become more pronounced, in particular on the level of households or neighborhoods.

Several systems for energy storage on the level of households or neighborhoods have been proposed. Examples of energy storage devices include hot water tanks (boiler technology), lithium-ion batteries and thermochemical energy storage devices. A particular challenge in this field is to achieve a high energy storage density with a minimal loss of energy during prolonged storage. With hot water tank technology, it is typically possible to achieve a energy storage density of about 0.1 to 0.15 GJ/m³ on system level, using typical loading and unloading temperatures, while with thermochemical energy storage devices based on adsorption and desorption of for instance water on hydroscopic salts (as *e.g.* described in Cot-Gores et al., Renewable and Sustainable Energy Reviews 16 (2012) 5207-5224), an energy storage density in the range of typically 0.1 to 1 GJ/m³ on a system level is possible using hydration/dehydration reactions in similar temperature ranges is possible.

A particular high energy storage density can be achieved with chemical looping combustion (CLC), namely up to about 12 GJ/m³ on a system level. CLC is based on fuel combustion with the use of an intermediate oxygen carrier that is generally cycled between two reactors, i.e. an oxidizing reactor and a reducing reactor, or in a single reactor used alternatingly as oxidizing and reducing reactor. In the oxidizing reactor, a metal is brought into contact with an oxygen-containing gas (also referred to as an oxidizing gas, *e.g.* air) to produce metal oxides and heat. The heat can subsequently be used for other purposes, for instance to drive a turbine to produce electricity. In the reducing reactor, the fuel (*e.g*. methane) is contacted with the metal oxide to produce metal, CO₂ and water, while chemically storing the energy of the fuel (see Hossain et al., Chemical engineering science 2008, 63, 4433-4451). In general, CLC is used to decouple the flue gases nitrogen gas and CO₂ in the fuel combustion and not for the storage of energy.

A drawback of conventional CLC for the use of energy storage is the poor control over the discharging and charging of the reactors due to the rapid redox reactions. In addition, during discharge (i.e. during the production of heat) some of the generated heat can not be exchanged with the system. For instance, if the hot exhaust gases of the CLC reactor are used to heat an electricity turbine, the heat radiated by the CLC reactor can not be used. In addition, the entire reactor must be heated before hot gas is expelled.

It is desired to provide a system that solves at least one of these drawbacks.

Surprisingly, the present inventors found that placing a chemical combustion reactor in a heat transfer fluid (HTF) tank provides a more flexible system such that control over the demand and supply is improved. A further advantage is that heat loss is reduced. For instance, when the system is used in a household and a temporary demand for heat in the form of hot water is requested, the HTF tank can provide this heat without requiring the chemical combustion reactor to be initiated. Accordingly, the present invention is directed to a system for energy storage comprising:
- a heat transfer fluid (HTF) tank (1) comprising a HTF (2) such as water;
- a chemical combustion reactor (3) that is at least partially filled with a metal and/or an oxide thereof (4), and that comprises a gas inlet (5) and a gas outlet (6);
wherein said chemical combustion reactor is at least partially submerged in the HTF within said HTF tank.
Figure 1 illustrates an embodiment of the present invention.
Figure 2 illustrated another embodiment of the present invention.
Figure 3 illustrates a particular embodiment of the chemical combustion reactor and a heater in accordance with the present invention.
In figure 4a-d, several shapes of wall structures of the chemical combustion reactor in accordance with the present invention are illustrated.
In Figure 5, another embodiment of the present invention is illustrated.
Figure 6 illustrates another particular embodiment of the chemical combustion reactor, in particular the internal configuration thereof, in accordance with the present invention.
In Figure 7, a particular embodiment of the present invention is illustrated.

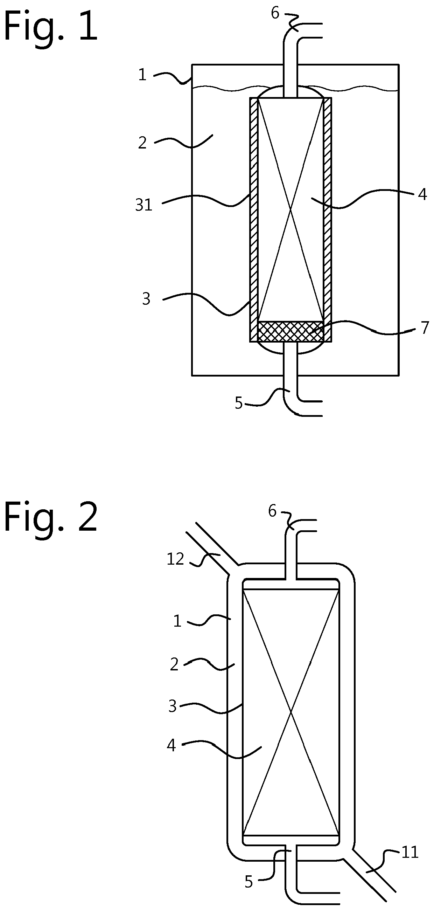

The chemical combustion reactor is at least partially submerged in the HTF within said HTF tank. This means *i.a*. that the HTF tank may be partially filled with HTF (this would be particularly suitable for handling the volumetric expansion and compression of the HTF due to heating and cooling thereof). In such embodiment, it is preferred that the level of HTF in the HTF tank is above the level of the metal in the chemical combustion reactor (as illustrated in figure 1) such that the heat generated during discharging of the metal can be transferred to the HTF in an efficient manner.

In another embodiment, as illustrated in figure 2, the HTF tank may be essentially completely filled with HTF. In such an embodiment, it is preferred that the HTF comprises and inlet and/or outlet (11, 12 respectively) through which HTF can be fed in and/or out of the HTF tank to handle volumetric expansion and compression of the HTF. These in- and outlet can also be used to transport heated HTF for use therefor and/or to empty the HTF during charge (*vide infra*)*.* Thus, in case the chemical combustion reactor is fully circumvented by HTF, this is also to be understood as submerged in the context of the present invention.

In addition, the chemical combustion reactor may be partially submerged for certain functions of the system only (*e.g.* for discharging), since it may be that for other functions (*e.g*. for charging) it is preferred that the chemical combustion reactor is temporary not submerged in the HTF (*vide infra*). The term 'partially submerged' herein thus i.a. means that the system is adapted such that the chemical combustion reactor is capable of being submerged in the HTF within the HTF tank and that when the HTF tank is filled with HTF, the chemical combustion reactor is at least partially submerged in the HTF.

Yet another advantage of this system is that discharging thereof is more controlled, meaning that the oxidation reaction in the chemical combustion reactor can be carried out slower than in the absence of the HTF tank. This has several advantages, in particular when the chemical combustion reactor is a fixed bed chemical combustion reactor, which is preferred. Firstly, a slower reaction is more controlled in the sense that the reaction front that moves through the reactor (*i.e*. the local site where the oxidizing gas stream reacts with the metal, also referred to a heat front) remains sharp, thin and locally well-defined such that the reaction front moves evenly through the reactor. A faster reaction generally results in a disturbed reaction front which is less efficient in terms of heat generation and heat exchange. Secondly, it enables a more effective use of the reactive content of the chemical combustion reactor since the supply of heat can be better matched with the demand.

Preferably, the reaction front moves through the chemical combustion reactor with a rate in the range of 0.1 to 0.5 mm/s, preferably about 0.2 mm/s. A chemical combustion reactor having a length of 2 meter (which would typically fit in a household environment), being discharged at a rate of 0.2 mm/s would last about 3 hours.

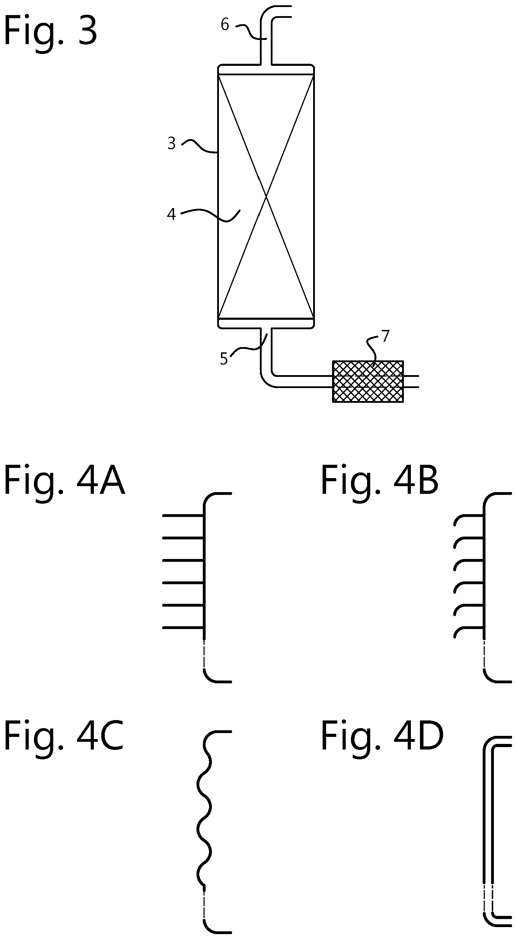

Typically, the discharging of the chemical combustion reactor requires activation energy and pre-heating of the metal before the oxidation reaction can be carried out. Accordingly, in a preferred embodiment, the system further comprising a heater (7) that is thermally connected to the chemical combustion reactor. In a further preferred embodiment, the heater is located in the chemical combustion reactor, for instance at the end where the oxidizing gas is led into the reactor, such that it can locally heat part of the metal and/or an oxide thereof, as illustrated in figure 1. Alternatively, the heater may be thermally connected to a gas input through which the oxidizing gas is led towards and into the chemical combustion reactor such that the gas can be heated and the heated gas can heat the metal for the oxidation reaction to commence, as illustrated in figure 3. The heater connected to the gas input system can be particularly suitable for reinitiating the discharging of the chemical combustion reactor if it already has partially been consumed, or the charging when this was intermediately stopped.

In a particular embodiment, a single heater is connected to multiple inputs of multiple chemical combustion reactors (*vide infra* for a further description of the plurality of the chemical combustion reactors). This configuration is particularly suitable and efficient for operating multiple chemical combustion reactors in a parallel manner. It may be appreciated that the system may also comprise more than one heater and a combination of several heaters at different locations (*e.g*. one or more heaters may be located in the chemical combustion reactor in combination with one ore more heaters that are thermally connected to the inlet of the chemical combustion reactor).

The chemical combustion reactor has a wall (31) that is thermally connected to the HTF in the HTF tank such that the chemical combustion reactor can heat the HTF by transferring heat through the wall. The wall can be heat insulating or heat conducting, depending on the optimal heat exchange for the system. Since the discharging of the chemical combustion reactor is exothermic, the discharging can provide the required activation energy. In other words, the reaction can be self-sustainable. However, if too much heat would be transferred to the HTF tank, the temperature of the chemical combustion reactor can drop below a critical minimal threshold (i.e. the minimum temperature at which the reaction is self-sustainable) and the discharging may cease. However, if too little heat would be transferred to the HTF tank, the temperature of the chemical combustion reactor can increase above a critical maximum threshold and the metal may sinter, melt, cluster or otherwise be damaged. The critical minimal threshold depends i.a. on the type of metal, the flow speed of reactive gases, and concentration of oxygen in the oxidizing gas.

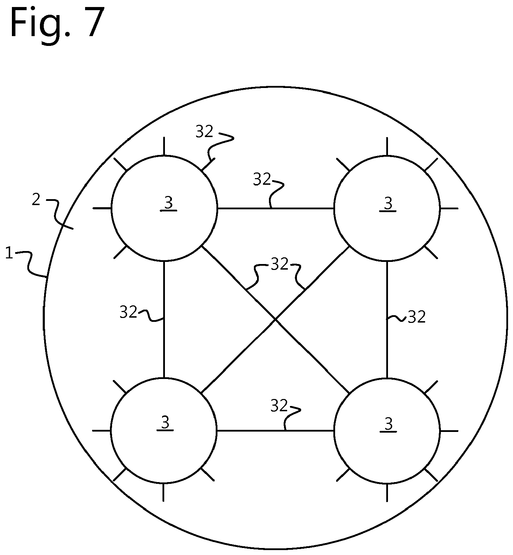

Insulation properties of the wall can be provided by insulating materials or double wall systems. Heat conductivity of the wall can be increased by increasing the surface or contact area with the HTF, for instance by using a corrugated wall, or extruding ribs or fins onto the wall (see example thereof in figure 4, a-c). The extruding ribs or fins may also connect two or more chemical combustion reactors within a single HTF tank (*e.g.* as depicted in figure 7). In figure 7, a top view of vertically placed cylindrical reactors (3) in a cylindrical HTF tank (1) is illustrated, which reactors are equipped with vertically elongated extruding fins (32) of which some span between two reactors.

Optimum heat insulation or conductivity properties of the wall can also depend on the shape of the chemical combustion reactor. Preferably the chemical combustion reactor has a cylinder shape. The HTF tank may optionally comprise a device for actuating the HTF fluid therein, e.g. a stirring device, to create a forced convection flow of the HTF such that heat transfer from a reactor into the HTF fluid can be enhanced.

In a preferred embodiment, the wall is a heat-conductivity switchable wall which is a wall adapted such that the heat exchange between the chemical combustion reactor and the HTF is switchable. An example of such a wall is a double wall of which the interior (i.e. the space between said walls) can be alternately filled with fluids and/or gases having different heat conductivity properties (see figure 4d for an illustration of a part of a double wall). Said heat-conductivity switchable wall is particularly useful for being capable of providing more heat insulation during the start-up phase of the reactor while also being capable of providing less heat insulation or more heat conductivity after the start-up phase and during discharge. In addition, said heat-conductivity switchable wall can be capable of providing heat insulation during charging of the chemical combustion reactor to restrict or prevent heat being transferred from the HTF in the HTF tank to the chemical combustion reactor, in particular when the charging is endothermic, while also being capable of providing less heat insulation (or more heat conductivity) during the discharging of the chemical combustion reactor.

Charging of the chemical combustion reactor can be carried out by providing a reducing gas stream, preferably a reducing gas stream comprising hydrogen gas, and leading said reducing gas stream into the chemical combustion reactor and allowing the reducing gas stream to react with a metal oxide in the chemical combustion reactor to reduce the metal oxide. Depending on the reducing gas stream, the charging reaction may be endo- or exothermic. In particular when this reaction is endothermic, it may be preferred to transfer the HTF in the HTF tank in which the chemical combustion reactor is submerged to another storage tank to restrict or prevent heat being transferred from the HTF in the HTF tank to the chemical combustion reactor. Therefore, the system preferably further comprises a HTF storage tank that is in fluid connection to said HTF tank. In case the HTF comprises mainly water, it may also be possible to remove the HTF altogether from the system, *i.e*. send it down the drain. In such case, a sink can be fitted in the system.

In the embodiments wherein the reducing gas comprises hydrogen, it is preferred that the system further comprises a hydrogen getter. Such a getter can act as a hydrogen sponge to adsorb remaining hydrogen from the system after charging it. This may render purging of the system unnecessary and allows re-use of the remaining hydrogen gas during a subsequent charge.

The system of the present invention may comprise multiple chemical combustion reactors, multiple HTF tanks and multiple chemical combustion reactors per HTF tank. In a preferred embodiment, the system comprises a plurality of the chemical combustion reactor, wherein each chemical combustion reactor is at least partially submerged in the HTF within said HTF tank.

In embodiments with the plurality of the chemical combustion reactors, it is preferred that each reactor can be operated (i.e. charged and discharged) independently. This provides additional flexibility to the system and enables for instance simultaneous charging and discharging of the system and energy conversion. It is further preferred that the arrangement of reactors within the HTF is such that they are evenly distributed and spaced maximally with respect to each other in the total space that is taken by the reactors. The number of reactors may accordingly also appropriately be chosen. For instance, in case the HTF and the reactors are cylindrical, the reactors are preferably placed co-axially and parallel with respected to each other and the HTF tank and arranged within a hexagonal pattern, comprising *e.g.* 7 or 19 of such reactors.

The charging of the chemical combustion reactor can be carried out with a reducing gas. Depending on the storage application of the system, the origin of the gas may differ. For instance, if the present system is used to store energy of (a surplus of) methane-comprising gas, for instance biogas, the reducing gas can comprise a methane-comprising gas. Alternatively, or additionally, if the present system is used to (virtually) store electrical energy (*i.e*. to store an excess of electricity by converting the electricity to the chemical energy storage and heat storage in accordance with the present invention), the reducing gas may be provided by electrolysis of a liquid, for instance water. Thus, the excess of energy electricity may be converted into chemical energy (*i.e*. in the form of the reducing gas), which may again be converted into heat. Accordingly, it is preferred that the system further comprises a reducing gas supply system, more preferably a water electrolyzing apparatus. This prevents the requirement of off-site gas generation and transportation.

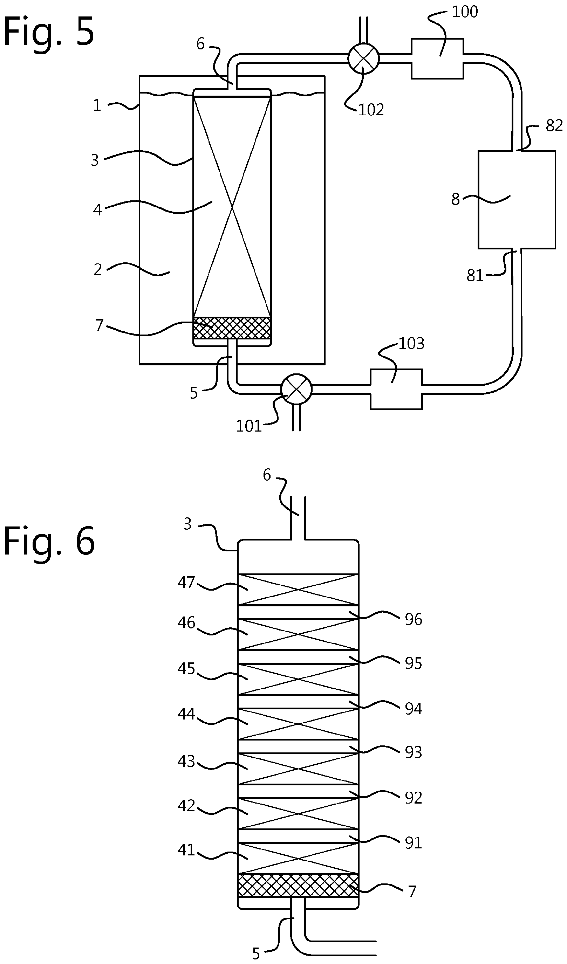

As a preferred reducing gas, hydrogen is used. This gas advantageously typically only produces water upon charging of the chemical combustion reactor. In the embodiment wherein the system comprises the water electrolyzing apparatus (8) to provide the hydrogen-containing reducing gas, it is preferred that the water electrolyzing apparatus comprises a hydrogen gas outlet (81) that is connected to the gas inlet (5) of the chemical combustion reactor and a water inlet (82) that is connected to the gas outlet (6) of the chemical combustion reactor such that a closed water system is provided (see figure 5). The several inlet and outlet may be connected through valves (101, 102), such that the possibility for supplying and discharging other gases (*e.g*. oxidizing gas) remains possible. As such, the system does not require an additional water supply (although this may nonetheless still be present to replenish water if some is lost due to leakage). It may be beneficial to include an evaporator and possibly a condenser (100) between the gas outlet (6) of the chemical combustion reactor and the inlet (82) of the electrolyzing apparatus to convert gaseous water into liquid water and/or to cool the water originating from the chemical combustion reactor (see figure 5).

In yet another embodiment, the water electrolyzing apparatus comprises an oxygen gas outlet that is connected to the gas inlet of the chemical combustion reactor such that the oxidizing gas for example may have a higher oxygen content than air. In addition, or alternatively, it may be convenient to further include an oxygen storage and/or an oxygen concentrator (103) between the outlet (81) of the inlet (5) of the chemical combustion reactor, such that the oxygen can be buffered and used at will.

The chemical combustion reactor is filled with the metal and/or an oxide thereof (depending on the charge status of the reactor). Suitable metals (also referred to as oxygen carriers) comprise one or more metals selected from the group consisting of Al, Ti, V, Cr, Mn, Fe, Co, Ni, Cu, Zn, Zr and Sn, preferably Cu, Fe, Ni, Co, or Mn, preferably Cu, Fe, Ni, Co, and/or Mn. More preferably, the metal comprises copper. The metal may be metallic metal, or may be part of a salt or mineral such as ilmenite. Particularly suitable metals and minerals thereof are for instance described in *Progress in Chemical-Looping Combustion and Reforming Technologies* by Adánez et al., Progress in Energy and Combustion Science 38 (2012) p. 215-282 and in *Study of inexpensive oxygen carriers for chemical looping combustion* by Fossdal et al., International Journal of Greenhouse Gas Control 5 (2011) p. 483-488, which are both incorporated herein by reference. In a typical embodiment, the metal is supported on an inner support such as zeolite.

The present system may be based on a fluidized bed comprising the metal and/or an oxide thereof. However, preferably the system is based on a fixed bed of the metal and/or an oxide thereof. Thus in preferred embodiments, the chemical combustion reactor is a fixed bed chemical combustion reactor that is at least partially filled with one or more fixed beds comprising said metal and/or an oxide thereof. Examples of suitable fixed bed chemical combustion reactors are for instance described in WO 2006/123925 and WO 2012/144896.

The fixed bed has a porous structure of which the exposed surface is preferably essentially entirely covered with said metal. The porous structure provided good excess of the gas to the metal, while maintaining optimal use of the space in the reactor to provide a high energy storage density. An example of a suitable porous structure is a porous carrier such as a zeolite having the metal and/or an oxide thereof on its surface. Another example of a suitable structure is a mesh, grains, disks, rods or stacks thereof. To provide an optimal heat transfer to the HTF in the HTF tank, it may be advantageous that the fixed bed comprising the metal is configured as a plurality of layers within the chemical combustion reactor, and that one or more layers of said fixed bed is alternated with one or more heat insulating layers. The heat insulating layer can restrict heat transfer between the fixed bed layers that are divided by the heat insulating layer such that the heat transfer with the outside of the chemical combustion reactor (*i.e*. the HTF) is promoted. It should be noted however, that the heat insulating layer is preferably not too insulating such that too little heat is transferred within the reactor and the discharging would cease due to hindrance of heating the metal to a temperature higher than the critical minimal temperature. The insulation layer can comprise inert materials such as ordinary steel, stainless steel, ceramics, air etc.

In a particular embodiment of the present invention, the chemical combustion reactor comprises separated cartridges (41-47) which are each based on a supporting frame to support or carry the fixed bed as is illustrated in figure 6. Said cartridges are stackable within the fixed bed chemical combustion reactor to limit the internal pressure of the fixed bed (i.e. the pressure of the load of the higher-placed part of the fixed bed onto the lower-placed parts). In between two cartridges may be kept a vacant space (91-96), which can serve to provide air as the insulating layers described herein-above.

Limiting the internal pressure of the fixed bed can also be achieved by placing the reactor horizontally (instead of vertically as depicted in the figures). In yet another embodiment, the chemical combustion reactor may be helix-shaped or coiled. This reduced the load of the higher-placed part of the fixed bed onto the lower-placed parts, while allowing a reactor with a substantial length in the HTF tank.

HFT tank of the present system can be a standard HTF tank as used in water buffering systems. Preferably, the HTF is water, but any other liquid having a sufficient thermal absorption coefficient may also be suitable used. Suitable HTFs also include alcohols such as glycol, and organic or silicon oils.

Further aspects of the present invention are directed to methods for charging and discharging the system. A particular method for storing energy in a system in accordance with the present invention comprises providing a reducing gas stream, preferably a reducing gas stream comprising hydrogen gas, and leading said reducing gas stream into the chemical combustion reactor and allowing the reducing gas stream to react with a metal oxide in the chemical combustion reactor to reduce the metal.

For the purpose of clarity and a concise description features are described herein as part of the same or separate embodiments, however, it will be appreciated that the scope of the invention may include embodiments having combinations of all or some of the features described.

## Claims

1. System for energy storage comprising
- a heat transfer fluid (HTF) tank (1) comprising a HTF (2) such as water;
- a chemical combustion reactor (3) that is at least partially filled with a metal and/or an oxide thereof (4), and that comprises a gas inlet (5) and a gas outlet (6);
wherein said chemical combustion reactor is at least partially submerged in the HTF within said HTF tank.

2. System according to the previous claim, further comprising one or more heaters (7) that are thermally connected to the chemical combustion reactor and that, preferably are located in the chemical combustion reactor such that they can locally heat part of the metal and/or an oxide thereof in the chemical combustion reactor.

3. System according to claim 2, wherein the heater is connected to the gas inlet such that it can heat gas entering the chemical combustion reactor through said gas inlet.

4. System according to any of the previous claims, wherein the chemical combustion reactor comprises a wall that is thermally connected to the HTF in which the chemical combustion reactor is submerged, and wherein said wall is a heat-conductivity switchable wall.

5. System according to any of the previous claims comprising a plurality of the chemical combustion reactor, wherein each chemical combustion reactor is at least partially submerged in the HTF within said HTF tank.

6. System according to any of the previous claims, wherein the chemical combustion reactor has a cylinder shape or a helix shape.

7. System in accordance with any of the previous claims, further comprising a HTF storage tank that is in fluid connection to said HTF tank.

8. System in accordance with any of the previous claims, further comprising a reducing gas supply system (8), preferably a hydrogen gas supply system, more preferably a water electrolyzing apparatus comprising a hydrogen gas outlet (81) that is connected to the gas inlet (5) of the chemical combustion reactor and more preferably a water inlet (82) that is connected to the gas outlet (6) of the chemical combustion reactor.

9. System according to any of the previous claims, wherein the metal comprises one or more metals selected from the group consisting of Al, Ti, V, Cr, Mn, Fe, Co, Ni, Cu, Zn, Zr and Sn, preferably Cu, Fe, Ni, Co, or Mn, more preferably copper, or ilmenite.

10. System according to any of the previous claims, wherein the chemical combustion reactor is a fixed bed chemical combustion reactor that is at least partially filled with one or more fixed beds comprising said metal and/or an oxide thereof.

11. System according to the previous claims, wherein the fixed bed comprising the metal is configured as a plurality of layers (41-47), within the chemical combustion reactor, and wherein one or more layers of said fixed bed is alternated with one or more heat insolating layers (91-96).

12. System according to any of claims 10 or 11, wherein the fixed bed has a porous structure of which the exposed surface is preferably essentially entirely covered with said metal.

13. System according to any of claims 10-12, comprising cartridges comprising a supporting frame to support the fixed bed, said cartridges being stackable within the fixed bed chemical combustion reactor.

14. Method for storing energy in a system in accordance with any of the previous claims, said method comprising providing a reducing gas stream, preferably a reducing gas stream comprising hydrogen gas, and leading said reducing gas stream into the chemical combustion reactor and allowing the reducing gas stream to react with a metal oxide in the chemical combustion reactor to reduce the metal oxide.

15. Method for discharging energy from a system in accordance with any of claims 1-13, said method comprising providing an oxidizing gas stream, preferably an oxidizing gas stream comprising oxygen gas, and leading said oxidizing gas stream into the chemical combustion reactor and allowing the oxidizing gas stream to react with a metal in the chemical combustion reactor to oxidize the metal.
